(19) Europäisches Patentamt
European Patent Office
Office européen des brevets

(11) **EP 1 764 623 A1**

(12) **EUROPÄISCHE PATENTANMELDUNG**

(43) Veröffentlichungstag:
**21.03.2007 Patentblatt 2007/12**

(51) Int Cl.:
*G01S 7/03* (2006.01)        *G01S 13/08* (2006.01)
*G01S 13/75* (2006.01)

(21) Anmeldenummer: **05020150.8**

(22) Anmeldetag: **15.09.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **SIEMENS AKTIENGESELLSCHAFT**
**80333 München (DE)**

(72) Erfinder:
• **Gila, Janos, Dr.**
**2340 Mödling (AT)**
• **Konrad, Wolfgang, Dr.**
**2340 Mödling (AT)**
• **Österreicher, Johannes**
**2380 Perchtoldsdorf (AT)**

(54) **Verfahren und Vorrichtung zur Abstandsbestimmung zwischen einem RFID Schreib-/ Lesegerät und einem mobilen RFID-Datenspeicher**

(57)    Die Erfindung betrifft ein Verfahren und eine Vorrichtung zur Bestimmung des Abstands zwischen einem Schreib-/Lesegerät und einem mobilen Datenspeicher. Es wird ein HF-Trägersignal erzeugt, das sequentiell alternierend eine erste Trägereckfrequenz und eine zweite Trägereckfrequenz enthält, wobei die Phasen der ersten und der zweiten Trägereckfrequenz bei Frequenzwechsel gleich sind. Das HF-Trägersignal wird mit einer bestimmten Sendeleistung abgestrahlt und ein Trägerphasensignal wird erzeugt durch Mischen des HF-Trägersignals mit einem zuvor mit derselben Sendeleistung abgestrahlten, vom mobilen Datenspeicher gestreuten und wieder empfangenen HF-Trägersignal. Es wird jeweils eine Trägerphase für die im Trägerphasensignal enthaltene erste und zweite Trägereckfrequenz sequentiell ermittelt. Der Abstand zwischen dem Schreib-/Lesegerät wird bestimmt aus der Differenz der beiden Trägerphasen, wobei die Sendeleistung des HF-Trägersignals so eingestellt ist, dass eine Erfassungsgrenze kleiner ist als eine Eindeutigkeitsgrenze. Das Verfahren ist besonders vorteilhaft, weil durch das Anpassen der Sendeleistung in der Art, dass die Erfassungsgrenze kleiner ist als die Eindeutigkeitsgrenze, systematische Messfehler eliminiert werden.

FIG 3

EP 1 764 623 A1

**Beschreibung**

Die Erfindung betrifft ein Verfahren und eine Vorrichtung zur Bestimmung des Abstands zwischen einem Schreib-/Lesegerät und einem mobilen Datenspeicher im Allgemeinen und ein Verfahren und eine Vorrichtung zur Regelung des Erfassungsbereichs innerhalb der Eindeutigkeitsgrenze der Abstandsbestimmung im Besonderen.

Zur Bestimmung des Abstands zwischen einer stationären Basisstation und einem stationären oder beweglichen Objekt, wie zum Beispiel einem Fahrzeug oder einer Person, wird gemäß dem Stand der Technik häufig ein Radarsystem verwendet. In einem Radarsystem werden elektromagnetische Wellen (üblicherweise Mikrowellen im MHz- und GHz-Bereich) von der Basisstation gebündelt ausgesendet und in Form von vom Objekt reflektierten Echos wieder empfangen, die wiederum nach unterschiedlichen Kriterien ausgewertet werden. Eine spezielle Radartechnik stellt die modulierte CW-Radartechnik dar. Die Basisstation sendet Signale mit einer sich ständig ändernden Frequenz. Die Frequenz steigt entweder linear an, um bei einer bestimmten Frequenz abrupt auf den Anfangswert wieder abzufallen (Sägezahnmuster), oder sie steigt und fällt abwechselnd mit konstanter Änderungsgeschwindigkeit. Durch die lineare Änderung der Frequenz und das stetige Senden ist es möglich, neben der Differenzgeschwindigkeit zwischen Basis und Objekt auch gleichzeitig deren absolute Entfernung zu ermitteln.

Des weiteren sind Identifikationssysteme bekannt, die eine oder mehrere stationäre Basisstationen, sogenannte Schreib-Lesegeräte enthalten, die Daten mit mobilen Datenspeichern, wie zum Beispiel RFID tags, die an beweglichen Objekten angebracht sind, über eine auf Funk basierende Datenübertragungsstrecke berührungslos austauschen. Solche Identifikationssysteme werden in technischen Einrichtungen eingesetzt, in denen eine Vielzahl von Gegenständen bzw. Gütern möglichst schnell und frei bewegt werden müssen. Die Gegenstände können dabei unterschiedlichster Art sein wie zum Beispiel Pakete in einer Versandeinrichtung, Montageteile in einer Fertigungsanlage oder Gepäckstücke in einem Transportsystem.

Ein Beispiel für ein Identifikationssystem ist im ISO-18000-4-MOD-3 Standard mit dem Titel "Radio Frequency Identification Standard for Item Management - Air Interface" beschrieben. Die Norm sieht vor, dass durch das Schreib-/Lesegerät eine Abfrage auf Vorhandensein eines mobilen Datenspeichers im Erfassungsbereich erfolgt. Dazu sendet dieses ein unmoduliertes HF-Trägersignal mit einer festgelegten HF-Trägerfrequenz mit zum Beispiel 2,45 GHz aus. Dieses Trägersignal kann passiv von einem in der Nähe befindlichen mobilen Datenspeicher zum Beispiel durch sogenanntes Back Scattering zum Schreib-/Lesegerät mit Daten moduliert zurückgestreut werden und dann dort weiter verarbeitet werden. Beim Betrieb von zwei oder mehreren nahe beieinander angeordneter Basisstationen und mehreren Mobilen Datenspeichern, wie zum Beispiel bei benachbarten Fertigungsstraßen, ist darauf zu achten, dass es nicht zu unerwünschten Wechselwirkungen zwischen den einzelnen Basisstationen und den jeweiligen Mobilen Datenspeichern kommt. Es ist daher notwendig, dass der Erfassungsbereich der jeweiligen Basisstation eingeschränkt wird. Dies kann zum Beispiel auf Basis einer Abstandsbestimmung zwischen der Basisstation und dem jeweiligen Mobilen Datenspeicher erfolgen, wobei ein Mobiler Datenspeicher zum Beispiel nur mit dem ihm am nächsten stehenden Schreib-/Lesegerät kommuniziert.

In der Offenlegungsschrift DE 102 61 098 A1 wird ein Verfahren zur Abstandsbestimmung zwischen einer Basisstation und einem mobilen Objekt sowie einer Basisstation und ein Identifikationssystem für ein derartiges Verfahren beschrieben. Bei diesem Verfahren wird eine HF-Trägerfrequenz sequentiell so um eine Offset-Frequenz mittels einer IQ-Modulation erhöht und erniedrigt, dass die in einem dann modulierten HF-Trägersignal resultierenden HF-Trägereckfrequenzen bei Frequenzwechsel eine gleiche Phase aufweisen. Das HF-Trägersignal wird anschließend gesendet und zugleich mit einem vom mobilen Objekt zurückstreuten HF-Trägersignal zu einem Trägerphasensignal vermischt. Es wird für beide HF-Trägereckfrequenzen die zugehörige Trägerphase sequentiell ermittelt und dann aus deren Differenz der Abstand zwischen Basisstation und dem jeweiligen mobilen Objekt bestimmt. Bei dem in der Offenlegungsschrift beschriebenen Verfahren treten allerdings verfahrensbedingte Messfehler auf.

Der Erfindung liegt daher die Aufgabe zu Grunde, ein verbessertes Verfahren und eine verbesserte Vorrichtung zur Bestimmung des Abstands zwischen einem Schreib-/Lesegerät und einem Mobilen Datenspeicher anzugeben.

Die Aufgabe wird mit dem in Patentanspruch 1 angegebenen Verfahren zur Abstandsbestimmung und mit der in Patentanspruch 13 angegebenen Vorrichtung zur Abstandsbestimmung gelöst. Weitere vorteilhafte Ausführungen sind in den Unteransprüchen aufgeführt.

Durch die Erfindung wird ein verbessertes Verfahren zur Abstandsbestimmung zwischen einem Schreib-/Lesegerät und einem mobilen Datenspeicher geschaffen, wobei vom Schreib-/Lesegerät folgende Schritte ausgeführt werden: Es wird ein HF-Trägersignal erzeugt, wobei das HF-Trägersignal sequentiell alternierend eine erste Trägereckfrequenz $(f_0+f_1)$ und eine zweite Trägereckfrequenz $(f_0-f_1)$ enthält, und wobei die Phasen der ersten und der zweiten Trägereckfrequenz bei Frequenzwechsel gleich sind. Das HF-Trägersignal wird mit einer bestimmten Sendeleistung abgestrahlt und ein Trägerphasensignal wird erzeugt durch Mischen des HF-Trägersignals mit einem zuvor mit derselben Sendeleistung abgestrahlten, vom mobilen Datenspeicher gestreuten und wieder empfangenen HF-Trägersignal. Jeweils eine Trägerphase wird für die im Trägerphasensignal enthaltene erste und zweite Trägereckfrequenz $(f_0+f_1, f_0-f_1)$ sequentiell ermittelt und der Abstand zwischen dem Schreib-/Lesegerät und dem mobilen Datenspeicher wird bestimmt aus der Differenz der beiden Trägerphasen, wobei die Sendeleistung des abgestrahlten HF-Trägersignals so eingestellt ist, dass eine Erfassungsgrenze kleiner ist als eine Eindeutigkeitsgrenze, wobei die Eindeutigkeitsgrenze von der Differenz zwischen der ersten und zweiten Trägereckfrequenz ($f_0+f_1$, $f_0-f_1$) abhängt und wobei die Erfassungsgrenze der maximale bestimmbare Abstand zwischen dem Schreib-/Lesegerät und dem mobilen Datenspeicher ist.

Das erfindungsgemäße Verfahren ist besonders vorteilhaft, weil die Sendeleistung des abgestrahlten Trägerphasensignal so gering ist, dass die beiden Trägerphasen mittels derer der Abstand zwischen dem Schreib-/Lesegerät und dem mobilen Datenspeicher bestimmt wird, nur dann ermittelbar sind, wenn sich der mobile Datenspeicher innerhalb der Eindeutigkeitsgrenze für die Abstandsbestimmung befindet. Somit wird das Auftreten eines verfahrensbedingten systematischen Messfehlers, der weiter unten näher erläutert wird und der bei der Bestimmung des Abstands zwischen einem Schreib-/Lesegerät und einem mobilen Datenspeicher, der sich außerhalb der Eindeutigkeitsgrenze befindet auftritt, ausgeschlossen. Eine falsche Bestimmung des Abstands zwischen einem mobilen Objekt kann zum Beispiel in einer Fertigungsstraße fatale Folgen für den Fertigungsprozess haben, die durch das erfindungsgemäße Verfahren vermieden werden können.

Nach einer vorteilhaften Verfahrensvariante wird zwischen zwei Abstandsbestimmungen die erste und die zweite Trägereckfrequenz geändert. Die Änderung der beiden Trägereckfrequenzen ist dann besonders vorteilhaft, wenn Störungen in einem Frequenzband auftreten. Durch Änderung der Trägereckfrequenzen kann somit auf ein anderes Frequenzband ausgewichen werden.

Nach einer vorteilhaften Verfahrensvariante wird die Sendeleistung des HF-Trägersignals nach einer Änderung der ersten und zweiten Trägereckfrequenz so geändert, dass ein Trägerphasensignal, das aus einem wieder empfangenen HF-Trägersignal, welches von einem mobilen Datenspeicher außerhalb der Eindeutigkeitsgrenze für die Abstandsbestimmung gestreut wurde, nicht zur Abstandsbestimmung verwendet werden kann. Die Eindeutigkeitsgrenze ist eine Funktion der Differenz zwischen der ersten und zweiten Trägereckfrequenz. Eine Anpassung der Sendeleistung des HF-Trägersignals, so dass die Erfassungsgrenze unterhalb der Eindeutigkeitsgrenze liegt, hat den Vorteil, dass auch bei Änderung der Trägereckfrequenzen systematische Messfehler nicht auftreten. Die Erfassungsgrenze ist dabei die größtmögliche Entfernung zwischen dem Schreib-/Lesegerät und dem mobilen Datenspeicher, innerhalb der ein vom mobilen Datenspeicher gestreutes HF-Trägersignal noch zur Ermittlung des Abstands zwischen dem Schreib-/Lesegerät und dem mobilen Datenspeicher verwendet werden kann.

Nach einer weiteren vorteilhaften Verfahrensvariante ist die Sendeleistung des HF-Trägersignals so gering, dass ein von einem mobilen Datenspeicher, der sich im Abstand der halben Eindeutigkeitsgrenze für die Abstandsbestimmung zum Schreib-/Lesegerät befindet, gestreutes und wieder empfangenes HF-Trägersignal nicht zur Abstandsbestimmung verwendet werden kann. Indem durch Anpassung der Sendeleistung die Erfassungsgrenze halb so groß eingestellt wird wie die Eindeutigkeitsgrenze, werden systematische Messfehler in der Abstandsbestimmung zwischen einem Schreib-/Lesegerät und einem mobilen Datenspeicher, der sich nahe der Eindeutigkeitsgrenze befindet, vermieden.

Nach einer weiteren vorteilhaften Verfahrensvariante wird das HF-Trägersignal durch IQ-Modulation eines ersten Signals mit einer ersten Frequenz ($f_0$) mit einem zweiten Signal einer zweiten Frequenz ($f_1$) erzeugt. Dabei ist die erste Frequenz ($f_0$) die Trägerfrequenz und die zweite Frequenz ($f_1$) das aufmodulierte Signal. Die Erzeugung des HF-Trägersignals mittels IQ-Modulation hat den Vorteil, dass man auf besonders einfache und kostensparende Weise das HF-Trägersignal erzeugen kann. Besonders vorteilhaft wird zwischen zwei Abstandsbestimmungen die erste Frequenz ($f_0$) oder die zweite Frequenz ($f_1$) geändert. Dies hat den Vorteil, dass auf ein anderes Frequenzband ausgewichen werden kann für den Fall, dass Störungen auftreten.

Nach einer Verfahrensvariante wird die Sendeleistung des HF-Trägersignals nach einer Änderung der zweiten Frequenz ($f_1$) so geändert, dass aus einem wieder empfangenen HF-Trägersignal, welches von einem mobilen Datenspeicher außerhalb der Eindeutigkeitsgrenze für die Abstandsbestimmung gestreut wurde, nicht zur Abstandsbestimmung verwendet werden kann. Eine Anpassung der Sendeleistung des HF-Trägersignals, so dass die Erfassungsgrenze auch nach einer Änderung der zweiten Frequenz ($f_1$) unterhalb der Eindeutigkeitsgrenze liegt, hat den Vorteil, dass auch nach einer Frequenzänderung des zweiten Signals systematische Messfehler vermieden werden.

Nach einer vorteilhaften Verfahrensvariante wird ein Übertragungskanal mit einem oder mehreren Kanälen zur Abstandsbestimmung zwischen dem Schreib-/Lesegerät und dem Mobilen Datenspeicher verwendet. In einer besonders vorteilhaften Ausführungsform entspricht dabei der Übertragungskanal dem Notification Channel des ISO-18000-4-MOD-3 Standards.

Nach einer weiteren vorteilhaften Verfahrensvariante wird die Abstandsbestimmung zwischen einem Schreib-/Lesegerät und selektiv einem mobilen Datenspeicher aus einer Gruppe von mobilen Datenspeichern, die sich alle innerhalb der Eindeutigkeitsgrenze für die Abstandsbestimmung befinden, durchgeführt.

In einem anderen Aspekt betrifft die Erfindung ein Computerprogrammprodukt mit computerausführbaren Instruktionen, um das erfindungsgemäße Verfahren durchzuführen.

In einem weiteren Aspekt betrifft die Erfindung eine Vorrichtung zur Abstandsbestimmung zwischen einem Schreib-/Lesegerät und einem mobilen Datenspeicher mit Mitteln zur Erzeugung eines HF-Trägersignals, wobei das HF-Trägersignal sequentiell alternierend eine erste Trägereckfrequenz ($f_0$+$f_1$) und eine zweite Trägereckfrequenz ($f_0$-$f_1$) enthält, und wobei die Phasen der ersten und zweiten Trägereckfrequenz bei Frequenzwechsel gleich sind. Ferner mit Mitteln zur Abstrahlung des HF-Trägersignals mit einer bestimmten Sendeleistung und mit Mitteln zur Erzeugung eines Trägerphasensignals mittels Mischen des HF-Trägersignals mit einem zuvor mit derselben Sendeleistung abgestrahlten, vom im mobilen Datenspeicher gestreuten und wieder empfangenen HF-Trägersignal. Ferner beinhaltet die Vorrichtung Mittel zur sequentiellen Ermittlung von jeweils einer Trägerphase für die im Trägerphasensignal enthaltenen erste und zweite Trägereckfrequenz und Mittel zur Bestimmung des Abstands zwischen dem Schreib-/Lesegerät und den im mobilen Datenspeicher aus der Differenz der beiden Trägerphasen.

Bevorzugte Ausführungsformen der Erfindung werden nachfolgend anhand der Zeichnungen näher erläutert.

FIG 1    zeigt ein Blockdiagramm einer Vorrichtung zur Abstandsbestimmung.

FIG 2    zeigt eine beispielhafte Datenstruktur eines Übertragungskanals.

FIG 3    zeigt schematisch eine Schaltung, die in einer Vorrichtung zur Abstandsbestimmung eingesetzt werden kann.

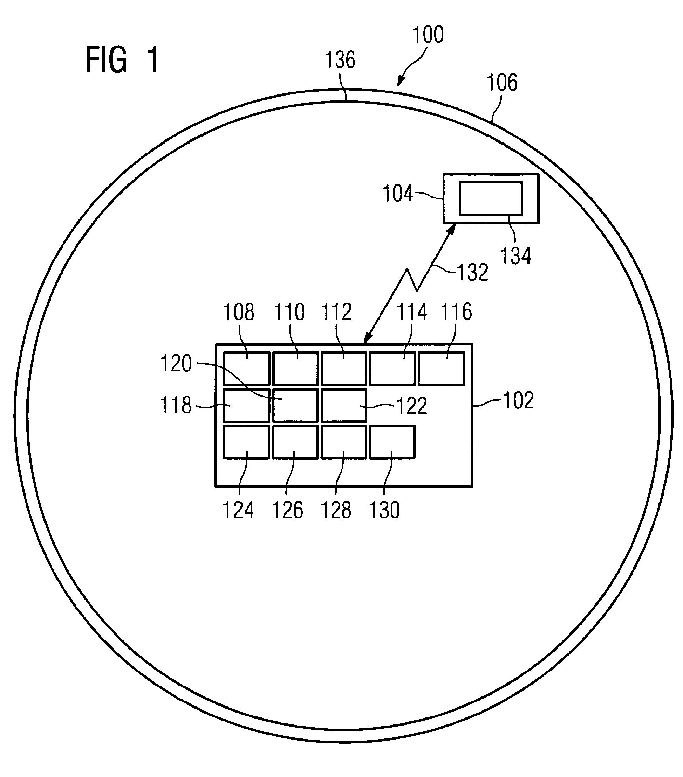

FIG 1 zeigt ein Blockdiagramm einer Vorrichtung mit einem Schreib-/Lesegerät 102, und einem mobilen Datenspeicher 104. Das Schreib-/Lesegerät 102 weist eine Antenne 124, einen regelbaren Verstärker 126, einen Modulator 128 und eine digitale Schaltung 130 auf. Der mobile Datenspeicher 104 weist eine Antenne 134 auf. Die Kommunikation zwischen Schreib-/Lesegerät 102 und mobilem Datenspeicher 104 findet über die Luftschnittstelle 132 statt.

Erfindungsgemäß wird im Schreib-/Lesegerät 102 ein HF-Trägersignal 108, das eine erste Trägereckfrequenz ($f_0$+$f_1$) 110 und eine zweite Trägereckfrequenz ($f_0$-$f_1$) 112 enthält, die bei Frequenzwechsel phasengleich sind, erzeugt. Zur Erzeugung des HF-Trägersignals 108 wird der Modulator 128, der zum Beispiel ein IQ-Modulator sein kann, und die digitale Schaltung 130, wie weiter unten beispielhaft beschrieben, verwendet. Das HF-Trägersignal 108 wird mittels der Antenne 128 mit einer bestimmten Sendeleistung abgestrahlt. Die Sendeleistung des HF-Trägersignals 108 wird dabei durch den regelbaren Verstärker 126 eingestellt. Bei Verwendung dieses Verfahrens innerhalb eines Identifikationssystems, in dem ein Schreib-/Lesegerät nicht nur im Abstand zu einem mobilen Datenspeicher bestimmt, sondern noch weitere Daten mit dem mobilen Datenspeicher austauscht, wird zum Beispiel der regelbare Verstärker 126 von der digitalen Schaltung 130 angesteuert. Damit kann die Sendeleistung nur während der Abstandsmessung verringert werden und während des Austausches anderer Daten zwischen Schreib-/Lesegerät und Mobilen Datenspeicher die Sendeleistung der zum Datenaustausch gesendeten Signale erhöht werden, um einen robusteren Datenaustausch sicherzustellen.

Das HF-Trägersignal 108 wird mit einem zuvor mit derselben Sendeleistung abgestrahlten, vom mobilen Datenspeicher 104 gestreuten und wieder empfangenen HF-Trägersignal 116 gemischt. Der mobile Datenspeicher 104 hat dabei das Signal über die Antenne 134 empfangen, dann moduliert und über die Antenne 134 wieder abgestrahlt.

Durch das Mischen wird ein Trägerphasensignal 114 erzeugt. Für die im Trägerphasensignal 114 enthaltenen erste und zweite Trägereckefrequenz ($f_0$+$f_1$, $f_0$-$f_1$) 110, 112 wird jeweils eine Trägerphase 118, 120 sequentiell ermittelt. Aus der Differenz der beiden Trägerphasen 118, 120 wird der Abstand 122 zwischen dem Schreib-/Lesegerät 102 und dem mobilen Datenspeicher 104 bestimmt. Die Sendeleistung des abgestrahlten HF-Trägersignals 116 ist dabei so gering, dass die beiden Trägerphasen nur dann ermittelbar sind, wenn sich der mobile Datenspeicher 104 innerhalb der Eindeutigkeitsgrenze 106 für die Abstandsbestimmung befindet. Es wird also erfindungsgemäß sichergestellt, dass die Erfassungsgrenze 136 während der Abstandsmessung kleiner ist als die Eindeutigkeitsgrenze. Die Eindeutigkeitsgrenze 106 ist der maximale Abstand innerhalb dessen eine Abstandsbestimmung zwischen Schreib-/Lesegerät und mobilen Datenspeicher ohne systematischen Messfehler durchgeführt werden kann.

Die Erfassungsgrenze ist der maximale Abstand für den im Prinzip noch ein Abstandswert ermittelbar ist. Dieser hängt in erster Linie von der Leistung des abgestrahlten, vom mobilen Datenspeicher gestreuten und wieder empfangenen Signals ab. Die Leistung des empfangenen Signals fällt z.B. bei isotroper Abstrahlung quadratisch mit der Abstand zwischen Schreib-/Lesegerät und mobilen Datenspeicher. Ab einem bestimmten Abstand, der Erfassungsgrenze, ist das Signal zu Rausch Verhältnis des aus dem empfangenen Signal gebildeten Trägerphasensignals zu gering, um daraus die Trägerphasen und den Abstand zu bestimmen.

Der Abstand d zwischen Schreib-/Lesegerät und mobilen Datenspeicher wird aus der Differenz der Trägerphasen d$\varphi$ durch folgende Formel bestimmt:

$$d^{[dm]} = 4{,}166 \times d\varphi^{[°]} / df^{[MHz]}.$$

Dabei ist die Differenz der Trägerphasen d$\varphi$ in Grad anzugeben und die Differenz d$\varphi$ zwischen der ersten und zweiten Trägerphase ist in MHz anzugeben. Das Ergebnis ist der Abstand d in Dezimetern.

Die maximale mögliche Differenz der Trägerphasen ist d$\varphi$ = 360°. Dabei folgt dann zum Beispiel bei einem Frequenzhub von df = 1,5 MHz eine Eindeutigkeitsgrenze von etwa 50 m. Ein systematischer Messfehler würde dann auftreten, wenn sich zum Beispiel ein mobiler Datenspeicher im Abstand von 60 m zum Schreib-/Lesegerät befinden würde. Ein gestreutes Signal, das von diesem mobilen Datenspeicher noch empfangen würde, würde dann zu einem Messwert von 10 m für den Abstand führen. Erfindungsgemäß ist sichergestellt, dass ein von einem Mobilen Datenspeicher, der sich außerhalb der Eindeutigkeitsgrenze befindet, gestreutes HF-Signal so leistungsschwach ist, das es nicht mehr zu einer Abstandsbestimmung verwendet werden kann. Das Signal zum Rauschverhältnis dessen mit dem wieder empfangenen Signal erzeugten Trägerphasensignals ist zu klein, um daraus die für die Abstandsbestimmung notwendigen Trägerphasen zu ermitteln. Somit tritt der oben beschriebene systematische Messfehler in dem erfindungsgemäßen Verfahren zur Abstandsbestimmung nicht mehr auf.

Besonders vorteilhaft ist es, wenn man die Erfassungsgrenze 136 kleiner als die Eindeutigkeitsgrenze 106 wählt. Zum Beispiel kann die Erfassungsgrenze 106 so eingestellt werden, dass sie in etwa halb so groß ist, wie die Eindeutigkeitsgrenze 106. Damit kann auch bei Verwendung des Verfahrens zum Beispiel in einer Fertigungsstraße, wo viele Reflektionswege möglich sind, die sich darüber hinaus durch Veränderung der Umgebung ändern können, vermieden werden, dass der systematische Messfehler auftritt.

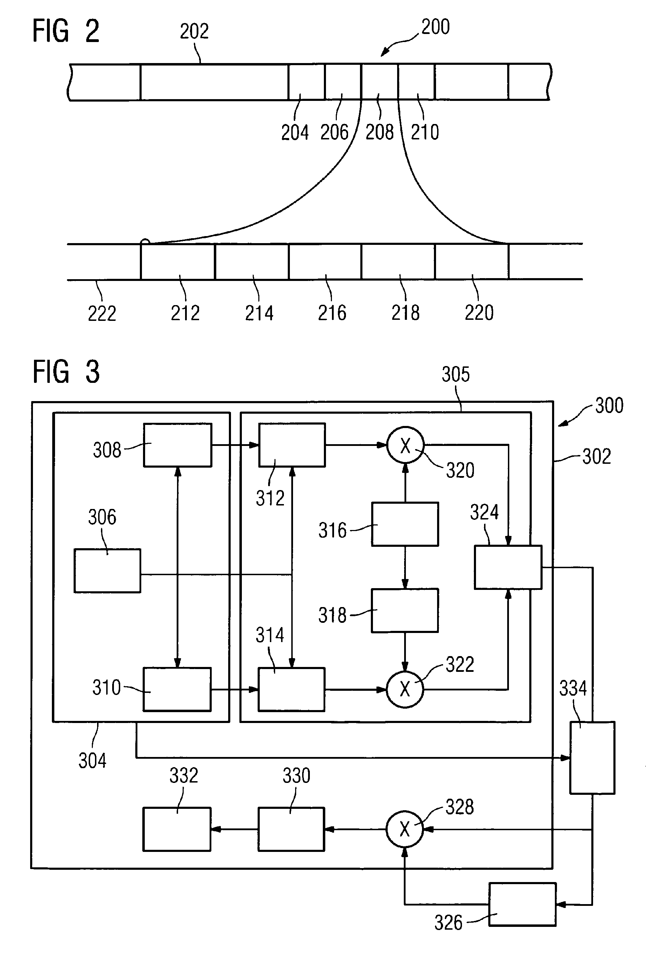

FIG 2 zeigt ein Blockdiagramm aus einem Teil der Datenstruktur eines Übertragungskanals N_CH 202 für die Kommunikation zwischen einem Schreib-/Lesegerät und einem Mobilen Datenspeicher. Die Datenstruktur des Übertragungskanals 202 entspricht der des Notification Channels im ISO-18000-4-MOD-3 Standard. Zur Abstandsmessung werden ein Kanal oder mehrere Kanäle 204, 206, 208, 210 benutzt. Das sind zum Beispiel bei Verwendung des ISO-18000-4-MOD-3 Standards die R2-Kanäle im Notification Channel des ISO-18000-4-MOD-3 Standards.

In 200 ist eine Unterstruktur 222 des Kanals 208, der zur Abstandsmessung verwendet wird, schematisch dargestellt. Darin sind fünf Zeitblöcke 212, 214, 216, 218 und 220 enthalten. Im Folgenden ist beschrieben, wie in einer Verfahrensvariante mittels des Notification Channel der Abstand bestimmt werden kann. Im ersten Zeitblock erfolgt die Einstellung einer ersten Frequenz ($f_0$), die einer Trägerfrequenz mit einer zweiten Frequenz ($f_1$) aufmoduliert wird. Damit wird dann die erste HF-Trägereckfrequenz ($f_0+f_1$) erzeugt. Im Zeitblock 214 wird die erste HF-Trägereckfrequenz ($f_0+f_1$) gesendet. Anschließend wird im Zeitblock 216 die erste Trägerphase $\varphi_1$ und die entsprechenden Messdaten durch einen digitalen Signalprozessor weiterverarbeitet. Im Zeitblock 218 wird die erste Frequenz ($f_0$) der zweite Frequenz aufmoduliert, woraus die zweite HF-Trägereckfrequenz ($f_0-f_1$) gebildet wird. Dies wird gesendet und im Zeitblock 220 wird die Trägerphase $\varphi_2$ ermittelt, woraus dann in einer Signalverarbeitungseinheit die Differenz der Trägerphasen $d\varphi = \varphi_1 - \varphi_2$ ermittelt wird.

FIG 3 zeigt schematisch eine mögliche Schaltung, die in einer Vorrichtung zur Abstandsbestimmung eingesetzt werden kann. Das Schreib-/Lesegerät, mit dem der Abstand zum mobilen Datenspeicher gemessen wird, beinhaltet dabei einen Sendempfänger 302, einen regelbaren Verstärker 334 und eine Antenne 326. Der Sendempfänger 302 beinhaltet eine digitale Schaltung 304, einen IQ-Modulator 305, einen Mischer 328, einen Filter und Tiefpass 330 sowie eine Signalverarbeitungseinheit 332.

Die digitale Schaltung 304 erzeugt und verwendet für die Erzeugung der Trägereckfrequenzen ($f_0+f_1$, $f_0-f_1$) einen Taktgeber 306, der ein Taktsignal mit einer bestimmten Frequenz $f_{Takt}$, mit der zum Beispiel, wie oben erwähnt, die Daten innerhalb einer Unterstruktur eines Zeitblocks im Notification Channel gemäß ISO-18000-4-MOD-3 Standards gesendet werden. Die digitale Schaltung, die zum Beispiel ein Field Programmable Gate Array (FPGA) sein kann, beinhaltet zwei sogenannte "Look-up Tables" ILT 308 bzw. QLT 310, welche Abtastwerte für die Signalwellenform für eine Modulation enthalten. Diese werden den digital/analog Konvertern 312 bzw. 314 zugeführt und dadurch in ein analoges Signal mit der Frequenz $f_1$ umgesetzt. Die "Look-up Tables" ILT 308 und QLT 310 sowie die digital/analog Konverter 314 und 312 werden mit der Taktfrequenz $f_{Takt}$ betrieben. Die analogen Signale mit der Frequenz $f_1$ aus den beiden digital/analog Konvertern 312 und 314 werden durch die beiden Mischer 320 und 322 mit dem vom Oszillator 316 erzeugten Signal mit der Frequenz $f_0$ moduliert, wobei das Signal mit der Frequenz $f_0$, das durch den Mischer 322 mit dem Signal der Frequenz $f_1$ moduliert wird im Vergleich zu dem Signal mit der Frequenz $f_0$ das vom Mischer 320 mit dem Signal der Frequenz $f_1$ gemischt wird mittels Phasenschieber 318 um 90° verschoben ist. Die beiden gemischten Signale werden in einem HF-Combiner 324 zu einem HF-Trägersignal addiert.

Die Leistung des HF-Trägersignals wird durch einen regelbaren Verstärker 324 geregelt. Der regelbare Verstärker wird dabei durch die digitale Schaltung 304 gesteuert. Dies ist besonders vorteilhaft bei Einsatz des Verfahrens in einem Identifikationssystem gemäß des ISO-18000-4-MOD-3 Standards. In einem solchen Identifikationssystem können auch noch andere Daten zwischen dem Schreib-/Lesegerät und dem mobilen Datenspeicher ausgetauscht werden. Für den Austausch dieser Daten ist es wichtig, dass die Datenübertragung fehlerfrei abläuft. D.h. man wird in der Regel während des Datenaustauschs Signale mit höherer Leistung abstrahlen und nur während der Abstandsmessung die Leistung herabsetzten, um sicherzustellen, dass die Erfassungsgrenze unter der Eindeutigkeitsgrenze liegt.

Ein Teil des HF-Trägersignals wird anschließend der Antenne 326 zugeführt und gesendet. Der andere Teil wird mit einem empfangenen, zuvor gesendeten HF Trägersignal, das von einem mobilen Datenspeicher gestreut wurde und durch die Antenne 326 wieder empfangen wurde, mit den Mischern 328 zu einem Trägerphasensignal mit den Trägereckfrequenzen $f_1+f_0$, $f_1-f_0$, gemischt. Über den Filter und Tiefpass 330 werden störende Frequenzanteile entfernt.

Die entsprechenden Phasen $\varphi_1$ bzw. $\varphi_2$ zu den Trägereckfrequenzen ($f_0+f_1$ bzw. $f_0-f_1$) werden dann in der elektrischen Signalverarbeitungseinheit 332 bestimmt. Aus der Differenz der Phasen $d\varphi = \varphi_1 - \varphi_2$ wird der zugehörige Abstand rechnerisch bestimmt. Der Abstand d zwischen Schreib-/Lesegerät und mobilen Datenspeicher ist in dieser Ausführungsform des Verfahrens gegeben durch:

$$d^{[dm]} = 4{,}166 \times d\varphi^{[°]} / (2 \times f_1)^{[MHz]}$$

Dabei ist $d\varphi = \varphi_1 - \varphi_2$ in Grad und $f_1$ ist die auf das Trägersignal mit der Frequenz aufmodulierte Frequenz $f_1$ in MHz. Das Ergebnis ist der Abstand d in Dezimetern.

**Patentansprüche**

1. Verfahren zur Abstandsbestimmung zwischen einem Schreib-/Lesegerät (SLG) (102) und einem mobilen Datenspeicher (MDS) (104), wobei folgende Schritte vom SLG ausgeführt werden:

   a) Erzeugung eines HF-Trägersignals (108), wobei das HF-Trägersignal (108) sequentiell alternierend eine erste Trägereckfrequenz ($f_0+f_1$) (110) und eine zweite Trägereckfrequenz ($f_0-f_1$) (112) enthält, wobei die Phasen der ersten und zweiten Trägereckfrequenz ($f_0+f_1$, $f_0-f_1$) (110,112) bei Frequenzwechsel gleich sind;
   b) Abstrahlung des HF-Trägersignals (108) mit einer bestimmten Sendeleistung;
   c) Erzeugung eines Trägerphasensignals (114) durch Mischen des HF-Trägersignals (108) mit einem zuvor mit derselben Sendeleistung abgestrahlten, vom MDS gestreuten und wieder empfangenen HF-Trägersignal (116);
   d) sequentielle Ermittlung von jeweils einer Trägerphase (118,120) für die im Trägerphasensignal (114) enthaltene erste und zweite Trägereckfrequenz ($f_0+f_1$, $f_0-f_1$) (110,112) und Bestimmung des Abstands (122) zwischen dem SLG (102) und dem MDS (104) aus der Differenz der beiden Trägerphasen (118,120), wobei die Sendeleistung des abgestrahlten HF-Trägersignals (116) so eingestellt ist, dass eine Erfassungsgrenze (136) kleiner ist als eine Eindeutigkeitsgrenze (106), wobei die Eindeutigkeitsgrenze (106) von der Differenz zwischen der ersten und zweiten Trägereckfrequenz ($f_0+f_1$, $f_0-f_1$) (110,112) abhängt und wobei die Erfassungsgrenze (136) der maximale bestimmbare Abstand zwischen SLG (102) und MDS (104) ist.

2. Verfahren nach Anspruch 1, wobei zwischen zwei Abstandsbestimmungen die erste und die zweite Trägereckfre-quenz ($f_0+f_1$, $f_0-f_1$) (110,112) geändert wird.

3. Verfahren nach einem der Ansprüche 1 oder 2, wobei die Sendeleistung des HF-Trägersignals (108) nach einer Änderung der ersten und zweiten Trägereckfrequenz ($f_0+f_1$, $f_0-f_1$) (110,112) so geändert wird, dass ein Trägerphasensignal (114), das aus einem wieder empfangenen HF-Trägersignal (108), welches von einem MDS (104) außerhalb der Eindeutigkeitsgrenze (106) für die Abstandsbestimmung gestreut wurde, nicht zur Abstandsbestimmung verwendet werden kann.

4. Verfahren nach einem der Ansprüche 1, 2 oder 3, wobei die Sendeleitung des HF-Trägersignals (108) so gering ist, dass ein von einem MDS (104), das sich im Abstand der halben Eindeutigkeitsgrenze (106) zum SLG (102) befindet, gestreutes und wieder empfangenes HF-Trägersignal (116) nicht zur Abstandsbestimmung verwendet werden kann.

5. Verfahren nach einem der vorherigen Ansprüche, wobei das HF-Trägersignal durch IQ-Modulation eines ersten Signals mit einer ersten Frequenz ($f_0$) mit einem zweiten Signal mit einer zweiten Frequenz ($f_1$) erzeugt wird.

6. Verfahren nach Anspruch 5, wobei zwischen zwei Abstandsbestimmungen die erste Frequenz ($f_0$) des ersten Signals oder die zweite Frequenz ($f_1$) des zweiten Signals geändert wird.

7. Verfahren nach einem der Ansprüche 5 oder 6, wobei die Sendeleistung des HF-Trägersignals nach einer Änderung der zweiten Frequenz ($f_1$) des zweiten Signals so geändert wird, dass ein Trägerphasensignal, das aus einem wieder empfangenen HF-Trägersignal erzeugt wurde, welches von einem MDS außerhalb der Eindeutigkeitsgrenze für die Abstandsbestimmung gestreut wurde, nicht zur Abstandsbestimmung verwendet werden kann.

**8.** Verfahren nach einem der vorherigen Ansprüche, wobei ein Übertragungskanal mit einem oder mehreren Kanälen zur Abstandsbestimmung zwischen dem SLG und dem MDS verwendet wird.

**9.** Verfahren nach einem der vorherigen Ansprüche, wobei der Übertragungskanal dem Notification-Channel des ISO-18000-4-MOD3-Standards entspricht.

**10.** Verfahren nach einem der vorherigen Ansprüche, wobei die Abstandsbestimmung zwischen dem SLG und selektiv einem MDS aus einer Gruppe von mobilen Datenspeichern, die sich innerhalb der Eindeutigkeitsgrenze für die Abstandsbestimmung befinden, durchgeführt wird.

**11.** Verfahren nach einem der vorherigen Ansprüche, wobei mehrere Abstandsbestimmungen erfolgen und dann eine Mittelung erfolgt.

**12.** Computerprogrammprodukt mit computerausführbaren Instruktionen, um ein Verfahren gemäß einem der Ansprüche 1 bis 11 auszuführen.

**13.** Vorrichtung zur Abstandsbestimmung zwischen einem Schreib-/Lesegerät (SLG) (102) und einem mobilen Datenspeicher (MDS) (104) mit:

   a) Mitteln zur Erzeugung eines HF-Trägersignals (108), wobei das HF-Trägersignal (108) sequentiell alternierend eine erste Trägereckfrequenz ($f_0+f_1$) (110) und eine zweite Trägereckfrequenz ($f_0-f_1$) (112) enthält, wobei die Phasen der ersten und zweiten Trägereckfrequenz ($f_0+f_1$, $f_0-f_1$) (110,112) bei Frequenzwechsel gleich sind;
   b) Mitteln zur Abstrahlung des HF-Trägersignals (108) mit einer bestimmten Sendeleistung;
   c) Mitteln zur Erzeugung eines Trägerphasensignals (114) durch Mitteln zum Mischen des HF-Trägersignals (108) mit einem zuvor mit derselben Sendeleistung abgestrahlten, vom MDS gestreuten und wieder empfangenen HF-Trägersignal (116) ;
   d) Mitteln zur sequentiellen Ermittelung von jeweils einer Trägerphase (118, 120) für die im Trägerphasensignal (114) enthaltene erste und zweite Trägereckfrequenz ($f_0+f_1$, $f_0-f_1$) (110,112) und Bestimmung des Abstands (122) zwischen dem SLG (102) und dem MDS (104) aus der Differenz der beiden Trägerphasen (118,120), wobei die Sendeleistung des abgestrahlten HF-Trägersignals (116) so eingestellt ist, dass eine Erfassungsgrenze (136) kleiner ist als eine Eindeutigkeitsgrenze (106), wobei die Eindeutigkeitsgrenze (106) von der Differenz zwischen der ersten und zweiten Trägereckfrequenz ($f_0+f_1$, $f_0-f_1$) (110,112) abhängt und wobei die Erfassungsgrenze (136) der maximale bestimmbare Abstand zwischen SLG (102) und MDS (104) ist.

**14.** Vorrichtung nach Anspruch 13, wobei zwischen zwei Abstandsbestimmungen die erste und die zweite Trägereckfrequenz ($f_0+f_1$, $f_0-f_1$) (110,112) geändert wird.

**15.** Vorrichtung nach einem der Ansprüche 13 oder 14, wobei die Sendeleistung des HF-Trägersignals (108) nach einer Änderung der ersten und zweiten Trägereckfrequenz ($f_0+f_1$, $f_0-f_1$) (110,112) so geändert wird, dass ein Trägerphasensignal (114), das aus einem wieder empfangenen HF-Trägersignal (116), welches von einem MDS (104) außerhalb der Eindeutigkeitsgrenze (106) für die Abstandsbestimmung gestreut wurde, nicht zur Abstandsbestimmung verwendet werden kann.

**16.** Vorrichtung nach einem der Ansprüche 13, 14 oder 15, wobei die Sendeleitung des HF-Trägersignals (108) so gering ist, dass ein von einem MDS, das sich im Abstand der halben Eindeutigkeitsgrenze (106) zum SLG (102) befindet, gestreutes und wieder empfangenes HF-Trägersignal (108) nicht zur Abstandsbestimmung verwendet werden kann.

**17.** Vorrichtung nach einem der Ansprüche 13 bis 16, wobei das HF-Trägersignal durch IQ-Modulation eines ersten Signals mit einer ersten Frequenz ($f_0$) mit einem zweiten Signal mit einer zweiten Frequenz ($f_1$) erzeugt wird.

**18.** Vorrichtung nach Anspruch 17, wobei zwischen zwei Abstandsbestimmungen die erste Frequenz ($f_0$) des ersten Signals oder die zweite Frequenz ($f_1$) des zweiten Signals geändert wird.

**19.** Vorrichtung nach einem der Ansprüche 17 oder 18, wobei die Sendeleistung des HF-Trägersignals nach einer Änderung der zweiten Frequenz ($f_1$) des zweiten Signals so geändert wird, dass ein Trägerphasensignal, das aus einem wieder empfangenen HF-Trägersignal erzeugt wurde, welches von einem MDS außerhalb der Eindeutigkeitsgrenze für die Abstandsbestimmung gestreut wurde, nicht zur Abstandsbestimmung verwendet werden kann.

**20.** Vorrichtung nach einem der Ansprüche 13 bis 19, wobei ein Übertragungskanal mit einem oder mehreren Kanälen zur Abstandsbestimmung zwischen dem SLG und dem MDS verwendet wird.

**21.** Vorrichtung nach einem der Ansprüche 13 bis 20, wobei der Übertragungskanal dem Notification-Channel des ISO-18000-4-MOD3-Standards entspricht.

**22.** Vorrichtung nach einem der Ansprüche 13 bis 21, wobei die Abstandsbestimmung zwischen dem SLG und selektiv einem MDS aus einer Gruppe von mehreren mobilen Datenspeichern, die sich innerhalb der Eindeutigkeitsgrenze für die Abstandsbestimmung befinden, durchgeführt wird.

**23.** Vorrichtung nach einem der Ansprüche 13 bis 22, wobei mehrere Abstandsbestimmungen erfolgen und dann eine Mittelung erfolgt.

FIG 1

**FIG 2**

**FIG 3**

**Europäisches** **EUROPÄISCHER TEILRECHERCHENBERICHT**
**Patentamt** der nach Regel 45 des Europäischen Patentübereinkommens für das weitere Verfahren als
europäischer Recherchenbericht gilt

Nummer der Anmeldung

EP 05 02 0150

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| L | EP 1 107 162 A (SIEMENS AKTIENGESELLSCHAFT) 13. Juni 2001 (2001-06-13) * Absatz [0010] - Absatz [0011] * ----- | 1-23 | G01S7/03 G01S13/08 G01S13/75 |
| Y | DE 102 61 098 A1 (SIEMENS AG) 15. Juli 2004 (2004-07-15) * das ganze Dokument * ----- | 1-23 | |
| Y | US 2004/032363 A1 (SCHANTZ HANS GREGORY ET AL) 19. Februar 2004 (2004-02-19) * das ganze Dokument * ----- | 1-23 | |
| Y | US 6 353 406 B1 (LANZL COLIN ET AL) 5. März 2002 (2002-03-05) * Spalte 30, Zeile 29 - Spalte 32, Zeile 5; Abbildung 7 * ----- | 1-23 | |
| Y | PATENT ABSTRACTS OF JAPAN Bd. 2000, Nr. 25, 12. April 2001 (2001-04-12) & JP 2001 223607 A (HITACHI KOKUSAI ELECTRIC INC), 17. August 2001 (2001-08-17) * Zusammenfassung; Abbildung 1 * ----- | 1,3,4,7, 15,16,19 | |

**RECHERCHIERTE SACHGEBIETE (IPC)**

G01S

## UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| München | 14. Dezember 2005 | Saur, E |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

EPO FORM 1503 03.82 (P04C09)

**Europäisches Patentamt**

**UNVOLLSTÄNDIGE RECHERCHE ERGÄNZUNGSBLATT C**

Nummer der Anmeldung

EP 05 02 0150

Unvollständig recherchierte Ansprüche:
  1-23

Nicht recherchierte Ansprüche:
  -

Grund für die Beschränkung der Recherche:

Die Offenbarung des Wesens der vorliegenden Erfindung, nämlich (Wortlaut der unabhängigen Ansprüche 1 und 13):

"wobei die Sendeleistung des abgestrahlten HF-Trägersignals (116) so eingestellt ist, dass eine Erfassungsgrenze (136) kleiner ist als eine Eindeutigkeitsgrenze (106)"

wird als derartig unzureichend angesehen, daß ein Fachmann nicht in der Lage ist, dieses als zu erreichendes Ergebnis definierte Merkmal auszuführen, Art. 83 EPÜ. Demzufolge war eine Recherche dieses Merkmals nicht möglich, R. 45 EPÜ. Die Recherche beschränkte sich auf diejenigen Merkmale der Anmeldung, welche die generelle Beschaffenheit des "Schreib-Lesegeräts (102)" und des "mobilen Datenspeichers (104)" betreffen.

**ANHANG ZUM EUROPÄISCHEN RECHERCHENBERICHT
ÜBER DIE EUROPÄISCHE PATENTANMELDUNG NR.**

EP 05 02 0150

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-12-2005

| Im Recherchenbericht angeführtes Patentdokument | | Datum der Veröffentlichung | Mitglied(er) der Patentfamilie | | Datum der Veröffentlichung |
|---|---|---|---|---|---|
| EP 1107162 | A | 13-06-2001 | KEINE | | |
| DE 10261098 | A1 | 15-07-2004 | AU | 2003296635 A1 | 22-07-2004 |
| | | | CA | 2479225 A1 | 15-07-2004 |
| | | | CN | 1692287 A | 02-11-2005 |
| | | | WO | 2004059340 A1 | 15-07-2004 |
| | | | EP | 1466189 A1 | 13-10-2004 |
| | | | US | 2005099333 A1 | 12-05-2005 |
| US 2004032363 | A1 | 19-02-2004 | AU | 2003256987 A1 | 03-03-2004 |
| | | | EP | 1537439 A2 | 08-06-2005 |
| | | | WO | 2004017087 A2 | 26-02-2004 |
| US 6353406 | B1 | 05-03-2002 | KEINE | | |
| JP 2001223607 | A | 17-08-2001 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10261098 A1